# EUROPEAN PATENT APPLICATION

(11) **EP 3 699 789 A1**
(43) Date of publication of application: **26.08.2020**
(21) Application number: 18882228.2
(22) Date of filing: 21.11.2018
(51) Int. Cl.: G06F 21/32

(54) **METHOD AND DEVICE FOR SECURITY VERIFICATION AND MOBILE TERMINAL**

(30) Priority: 22.11.2017 CN 201711175703
(71) Applicant: Vivo Mobile Communication Co., Ltd., Dongguan, Guangdong 523860 (CN)
(72) Inventor: DONG, Yunxia, Dongguan Guangdong 523860 (CN)
(74) Representative: Winter, Brandl, Fürniss, Hübner, Röss, Kaiser, Polte - Partnerschaft mbB
(86) International application number: PCT/CN2018/116673
(87) International publication number: WO 2019/101096

(57) **Abstract**

A method for security verification, an apparatus for security verification and a mobile terminal are provided. The method includes: determining whether a received touchscreen operation is a predetermined operation; acquiring biometric recognition verification information input by a user if the touchscreen operation is not the predetermined operation, and verifying the biometric recognition verification information; and performing verification processing corresponding to the predetermined operation if the touchscreen operation is the predetermined operation.

## Description

### CROSS-REFERENCE TO RELATED APPLICATION

The present application claims a priority to Chinese Patent Application No. 201711175703.8 filed in China on November 22, 2017, a disclosure of which is incorporated in its entirety by reference herein.

### TECHNICAL FIELD

The present disclosure relates to the field of computer technology, in particular to a method for security verification, an apparatus for security verification and a mobile terminal.

### BACKGROUND

With the development of terminal technology, users are increasingly concerned about the security of user data stored in terminal devices. For this reason, many terminal devices are provided with a biometric recognition module. Biometric recognition (for example, fingerprint recognition, facial recognition, voiceprint recognition, iris recognition, or the like) is used to perform a user identity verification and access control, thereby ensuring the security of user information. In addition, the user identity verification is facilitated. Taking fingerprint recognition for example, a user identity verification and access control process only requires a user to place a finger on a fingerprint recognition module, and the complicated setting and memorizing of a numeric password or gesture password are not needed.

### SUMMARY

The present disclosure provides in some embodiments a method for security verification, an apparatus for security verification and a mobile terminal.

According to a first aspect, the present disclosure provides in some embodiments a method for security verification, including: determining whether a received touchscreen operation is a predetermined operation; acquiring biometric recognition verification information input by a user if the touchscreen operation is not the predetermined operation, and verifying the biometric recognition verification information; and performing verification processing corresponding to the predetermined operation if the touchscreen operation is the predetermined operation.

Optionally, the verifying the biometric recognition verification information includes: determining that the security verification succeeds if the biometric recognition verification information matches preset first verification information; and the performing the verification processing corresponding to the predetermined operation if the touchscreen operation is the predetermined operation includes: acquiring the biometric recognition verification information input by the user if the touchscreen operation is the predetermined operation, and determining that the security verification fails when the biometric recognition verification information matches the first verification information.

Optionally, the predetermined operation is any one or combination of two or more of following operations: a tap, a swipe, a press, a multi-touch, multiple consecutive taps, and a gesture based on a writing symbol.

Optionally, the performing the verification processing corresponding to the predetermined operation if the touchscreen operation is the predetermined operation includes one or a combination of two or more of the following operations: disabling a biometric recognition module so that the biometric recognition module is unavailable for preset first duration; disabling the biometric recognition module so that the biometric recognition module is unavailable for a preset first number of times; disabling the biometric recognition module, and changing an authentication mode.

Optionally, the method further includes: deleting a locally pre-stored biometric feature corresponding to the biometric recognition module.

According to a second aspect, the present disclosure provides in some embodiments an apparatus for security verification, including: a determination module, configured to determine whether a received touchscreen operation is a predetermined operation; a biometric recognition verification module, configured to: acquire biometric recognition verification information input by a user if the touchscreen operation is not the predetermined operation, and verify the biometric recognition verification information; and a security verification module, configured to perform verification processing corresponding to the predetermined operation if the touchscreen operation is the predetermined operation.

Optionally, the biometric recognition verification module is configured to: determine that the security verification succeeds if the biometric recognition verification information matches preset first verification information; and the security verification module is configured to: acquire the biometric recognition verification information input by the user if the touchscreen operation is the predetermined operation, and determine that the security verification fails when the biometric recognition verification information matches the first verification information.

Optionally, the predetermined operation is any one or combination of two or more of following operations: a tap, a swipe, a press, a multi-touch, multiple consecutive taps, and a gesture based on a writing symbol.

Optionally, the security verification module is configured to perform one or a combination of two or more of the following operations: disabling a biometric recognition module so that the biometric recognition module is unavailable for preset first duration; disabling the biometric recognition module so that the biometric recognition module is unavailable for a preset first number of times; disabling the biometric recognition module, and changing an authentication mode.

Optionally, the apparatus further includes: a biometric feature deletion module, configured to delete a locally pre-stored biometric feature corresponding to the biometric recognition module.

According to a third aspect, the present disclosure provides in some embodiments a mobile terminal, including a processor, a storage, and a computer program stored in the storage and configured to be executed by the processor, where the processor is configured to execute the computer program to implement steps in the foregoing method for security verification provided in the first aspect.

According to a fourth aspect, the present disclosure further provides in some embodiments a non-volatile computer-readable storage medium, including a computer program stored in the non-volatile computer-readable storage medium, where the computer program is configured to be executed by a processor to implement the steps in the foregoing method for security verification provided in the first aspect.

### BRIEF DESCRIPTION OF THE DRAWINGS

To describe the technical solutions in some embodiments of the present disclosure or in the related art more clearly, the following briefly introduces the accompanying drawings required for describing the embodiments or the related art. Apparently, the accompanying drawings in the following description show only some of embodiments of the present disclosure, and persons of ordinary skill in the art may derive other drawings from these accompanying drawings without creative efforts.
Fig. 1 is a flowchart of a method for security verification according to the present disclosure;
Fig. 2 is another flowchart of a method for security verification according to the present disclosure;
Fig. 3 is a schematic diagram of a verification page of a terminal device according to the present disclosure;
Fig. 4 is a schematic diagram of a setting page for disabling biometric recognition verification according to the present disclosure;
Fig. 5 is a schematic structural diagram of an apparatus for security verification according to the present disclosure;
Fig. 6 is a schematic structural diagram of a mobile terminal according to the present disclosure.

### DETAILED DESCRIPTION

The present disclosure provides in some embodiments a method for security verification, an apparatus for security verification and a mobile terminal.

To enable a person skilled in the art to better understand the technical solution of the present disclosure, the following clearly and completely describes the technical solutions in some embodiments of the present disclosure with reference to the accompanying drawings in the embodiments of the present disclosure. Apparently, the described embodiments are merely a part rather than all of the embodiments of the present disclosure. All other embodiments obtained by persons of ordinary skill in the art based on the embodiments of the present disclosure without creative efforts shall fall within the scope of the present disclosure.

Compared with a gesture password, a character password, or the like commonly seen in the related art, security can be significantly enhanced by fingerprint recognition. However, in some special scenarios, for example, when a user is unconscious (for example, the user is asleep, is in a coma, loses motor function, or the like) or the user is in a conscious but coerced/forced state, the user may be forced to perform a biometric recognition unlocking or payment (for example, fingerprint unlocking, fingerprint payment, or the like) operation. In these cases, a terminal device of the user may perform the foregoing operation, thereby causing user information leakage or even an economic loss.

The present disclosure provides in some embodiments a method for security verification, to solve the problem in the related art that user information leakage or even an economic loss may be caused in a scenario of an involuntary identity verification.

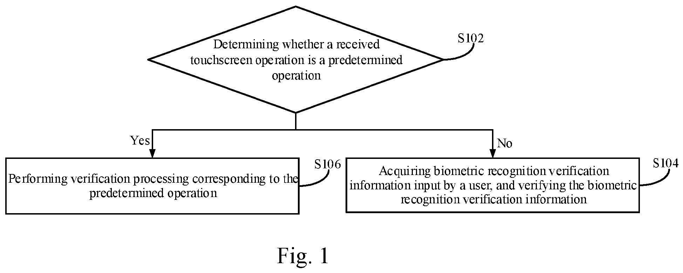

Fig. 1 is a flowchart of a method for security verification according to some embodiments of the present disclosure. The method for security verification may be performed by a terminal device. The terminal device may be a device such as a personal computer (PC), or may be a mobile terminal device such as a mobile phone, or a tablet computer. The terminal device may be a terminal device used by a user. The method is applicable to biometric recognition verification of a terminal device, user identity, or the like; further, the method is applicable to disablement or invalidation of currently used biometric recognition verification information in a terminal device, or the like. The method may specifically include the following steps S102, S104, and S106.

The step S102 includes: determining whether a received touchscreen operation is a predetermined operation.

There may be a plurality of touchscreen operations, which may be specifically set according to an actual situation, and specifically includes, for example, a tap, a swipe, a press (which may include a press at any position in a current display interface, a press at a specified position in a current display interface, and the like), a multi-touch (which may include, for example, a five-finger pinch, a three-finger swipe), multiple consecutive taps, a gesture based on a writing symbol (for example, a gesture drawing the symbol "S", or the like), or the like. The predetermined operation may be any one or combination of two or more of abovementioned touchscreen operations, and may be, for example, one of a press, a multi-touch, multiple consecutive taps, and a gesture based on a writing symbol, or a combination of two or more of a press, a multi-touch, multiple consecutive taps, and a gesture based on a writing symbol.

In an implementation, with the ongoing development of terminal technology, a terminal device, especially a mobile phone, becomes the device that is most frequently used and on which the most time is spent. To ensure the security of information stored in the terminal device, it is usually necessary to perform verification before access to information specified by a user or having a relatively high security requirement is allowed. For this purpose, the user may set verification information (for example, a password, or the like) in the terminal device. Taking the screen unlocking of the terminal device as an example, because the screen of the terminal device occupies an increasingly large proportion of area in the terminal device, to prevent the screen from being accidentally touched and improve the security of user data stored in the terminal device, the screen of the terminal device is usually locked when the user is not using the terminal device, and an unlocking password is also set for the screen of the terminal device. To further improve the security and convenience of the terminal device, the user may usually set an unlocking password based on biometric recognition. That is, the user sets a password (that is, verification information) including a character and/or gesture pattern, and registers personal biometric recognition verification information (for example, fingerprint verification information, facial verification information, iris verification information, or the like). In this way, the user may unlock the locked screen of the terminal device by using the registered biometric recognition verification information. Based on the foregoing process, the user may establish a verification mode for unlocking the screen of the terminal device. The biometric recognition verification information may be used to verify the identity of the user. The corresponding verification mode may be, for example, fingerprint verification, vein (including finger vein, or the like) verification, hand-shape verification, palm print verification, retina verification, ear verification, facial verification, iris verification, or the like. The aforementioned biometric recognition verification modes may be used to unlock the screen of the terminal device, or may be used to unlock a file, data, or the like stored in the terminal device, or may be used for application program launch verification, online payment verification, or the like.

To further ensure the security of information stored in the terminal device, various different verification information or verification modes may be set in the terminal device. Different verification information may be used to implement different functions or complete different operations. For example, a biometric recognition module is used to establish biometric recognition verification information for unlocking the screen of the terminal device, and a shortcut operation (for example, a touchscreen operation, or the like) for disabling or invalidating the biometric recognition module may further be established, or, a shortcut operation for switching to another verification mode is provided, or, a screen locking operation and/or other operation is performed. In a practical application, taking the screen unlocking of the terminal device as an example, when the user needs to unlock the screen, the screen of the terminal device may be turned on, and the terminal device may display a verification page. The verification page may provide a plurality of verification modes for the user to select, for example, verification through password including characters, verification through a gesture pattern, biometric recognition verification, and the like. At this time, the terminal device may detect an operation of the user to determine whether the user needs to undergo biometric recognition verification. If an indication that the user triggers a biometric recognition verification mechanism is received, it is determined that the user needs to undergo biometric recognition verification, so that the user may undergo the biometric recognition verification. Taking the biometric recognition verification being fingerprint verification for example, if an indication that the user places a finger in an area corresponding to a fingerprint capturing component is received, it is determined that the user needs to undergo fingerprint verification (that is, the biometric recognition verification).

The terminal device may further store the predetermined operation to perform in the process of biometric recognition verification. If it is determined that the user needs to undergo biometric recognition verification, the terminal device may detect the touchscreen operation of the user in real time. If the user does not want current biometric recognition verification to succeed, or in the case that the user may not want to perform biometric recognition verification for the sake of another person since the current biometric recognition verification is against the user's will (for example, the user is in an unconscious state (for example, the user is asleep, is in a coma or loses motor function) or the user is in a conscious but coerced/forced state, or the like), the user may perform the touchscreen operation in a display interface of the terminal device, the terminal device may acquire and/or record the touchscreen operation in real time, and compare the touchscreen operation with the predetermined operation, to determine whether the touchscreen operation input by the user is the predetermined operation.

In addition, the matter requiring biometric recognition verification is not limited to the screen unlocking of the terminal device, and may also be the launch of an application program, payment verification in a transaction process, or the like. Launch verification of an application program may specifically include the following process: the user may preset a processing mechanism of biometric recognition verification for the launch of one or more application programs. For a specific setting process, reference may be made to the foregoing verification setting process of screen unlocking. Details thereof are not described herein again. When the user needs to use an application program, the user may tap a corresponding application program shortcut icon in the terminal device. If the terminal device determines that the application program requires verification, a verification page may be displayed before the application program is launched. If an indication that the user triggers a biometric recognition verification mechanism is received, it is determined that the user needs to undergo biometric recognition verification. In this case, the user may undergo biometric recognition verification. For payment verification in a transaction process and verification for other matter, reference may be made to the foregoing related description. Details are not given herein again.

If it is determined that biometric recognition verification is not needed, the terminal device may perform verification processing according to a verification mechanism (i.e., a non-biometric recognition verification mechanism, such as a verification mechanism through a password including characters, and/or a verification mechanism through a gesture pattern) triggered by the user.

The step S104 includes: acquiring biometric recognition verification information input by a user if the touchscreen operation is not the predetermined operation, and verifying the biometric recognition verification information.

In an implementation, if it is determined that the touchscreen operation is not the predetermined operation by comparing the touchscreen operation input by the user with the predetermined operation, the terminal device may perform biometric recognition verification processing normally. During the process of undergoing biometric recognition verification, the user may input biometric recognition verification information in a verification information input page displayed during the biometric recognition verification. After acquiring the biometric recognition verification information input by the user, the terminal device may search verification information pre-stored in the terminal device for verification information matching the biometric recognition verification information input by the user. The terminal device may determine that current verification succeeds if the terminal device determines that the biometric recognition verification information input by the user matches the set verification information. The terminal device may determine that current verification fails if the biometric recognition verification information input by the user does not match the set verification information.

In a practical application, after verification succeeds, the terminal device may further perform an operation that needs to be performed after the verification succeeds. Then the terminal device may be triggered to perform an operation according to an operation corresponding to first verification information. The performed operation may be set according to an actual situation, and includes, for example, an unlocking operation, an identity verification operation, a payment verification operation, a locking operation, a deactivation operation, transmission of preset information to a target device, or the like. The target device may be a terminal device, a server or the like. The preset information may be information preset by the user, positioning information (for example, current geographical location of the terminal device, relative location of the terminal device with respect to the user, or the like), information generated by the terminal device according to a preset rule, or the like. This is not limited in embodiments of the present disclosure. Taking a screen unlocking process of the terminal device for example, the terminal device may unlock the screen if the biometric recognition verification information input by the user matches biometric recognition verification information for unlocking the screen. Then, the user may view the home interface displayed by the terminal device.

The step S106 includes: performing verification processing corresponding to the predetermined operation if the touchscreen operation is the predetermined operation.

There may be plural types of verification processing corresponding to the predetermined operation. The verification processing includes, for example, disabling the biometric recognition module, invalidating a biometric recognition verification function, turning off or locking the terminal device, transmitting preset information (for example, positioning information, a verification code, or the like) to a target device, or the like.

In an implementation, the terminal device may acquire and/or record the touchscreen operation in real time, and match the touchscreen operation against the pre-stored predetermined operation. If the touchscreen operation matches the predetermined operation, the terminal device may still display a biometric recognition verification page and prompt the user to input biometric recognition verification information. In this case, the user may input the biometric recognition verification information again. Even if the current input biometric recognition verification information is correct, the terminal device still determines that current verification fails. As can be learned from the above description, if the terminal device receives a touchscreen operation performed by the user during biometric recognition verification and the touchscreen operation is the predetermined operation, then regardless of whether the biometric recognition verification information input by the user is accurate, the terminal device determines that the verification fails, so as to protect personal information when the verification is against the user's will.

In a practical application, when biometric recognition verification is needed, if a touchscreen operation performed by the user is received and the touchscreen operation is the predetermined operation, the terminal device may further continue to perform an operation that needs to be performed after verification fails, wherein the performed operation may be set according to an actual situation and may include, for example, locking the terminal device, turning off the terminal device, transmitting preset information to a target device, or the like. The target device may be a terminal device, a server, or the like. The preset information may be information preset by the user, positioning information (for example, current geographical location of the terminal device, relative location of the terminal device with respect to the user, or the like), information generated by the terminal device according to a preset rule, or the like. This is not limited in embodiments of the present disclosure. Still taking a screen unlocking process of the terminal device for example, when biometric recognition verification is needed, if a touchscreen operation performed by the user is received and the touchscreen operation is the predetermined operation, the terminal device no longer unlocks the screen, instead the terminal device still displays a biometric recognition verification screen. If the user inputs first verification information (that is, a fingerprint, facial data, a voiceprint, iris data, or the like) again, the terminal device may determine that current verification fails. In this case, for example, the terminal device may be triggered to lock information related to the user to prevent a loss of the information, or the terminal device may be triggered to turn off the touchscreen or perform a power-off operation, or the like.

In the method for security verification provided in some embodiments of the present disclosure, it is determined whether a received touchscreen operation is a predetermined operation, then corresponding verification processing is performed. That is, if the touchscreen operation is not the predetermined operation, biometric recognition verification information input by a user is acquired and the biometric recognition verification information is verified; if the touchscreen operation is the predetermined operation, verification processing corresponding to the predetermined operation is performed. In this way, a set predetermined touchscreen operation is used to control whether biometric recognition verification succeeds. For example, when a situation where the identity verification may be against the user's will is encountered, the user may use the predetermined touchscreen operation to make the biometric recognition verification for unlocking, payment or the like to fail, so that it is ensured that no leakage of file or data stored in a terminal device would occur, thereby improving the security of user information and property.

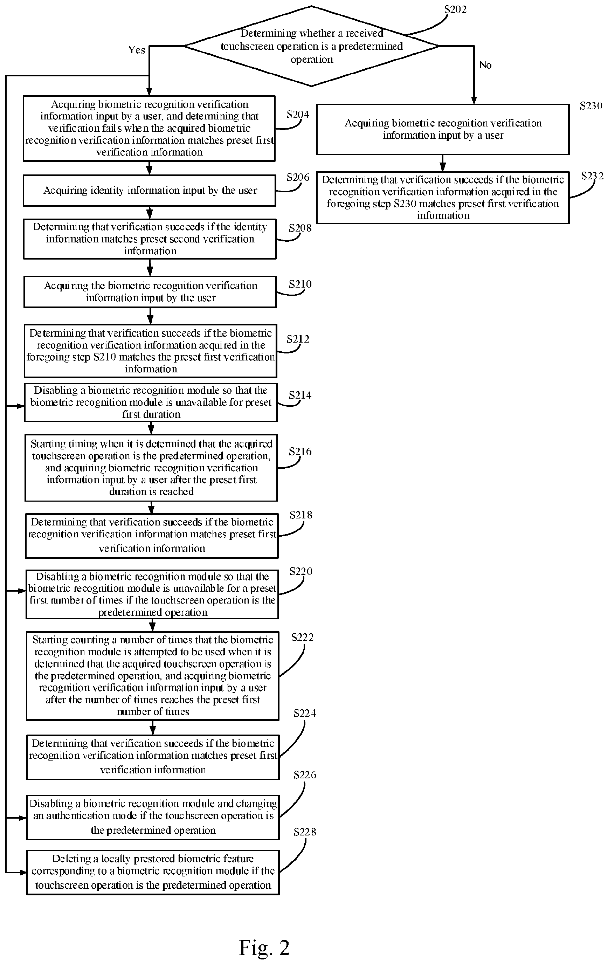

Fig. 2 is another flowchart of a method for security verification according to some embodiments of the present disclosure. The method for security verification may be performed by a terminal device. The terminal device may be a device such as a PC or may be a mobile terminal device such as a mobile phone or a tablet computer. The terminal device may be a terminal device used by a user. The method is applicable to biometric recognition verification of a terminal device, user identity, or the like; further, the method is applicable to disablement or invalidation of currently used biometric recognition verification information in a terminal device, or the like.

A process of disabling or invalidating the biometric recognition verification information currently used in the terminal device or a verification mode corresponding to the biometric recognition verification information is described in detail in the embodiment. In some special occasions (for example, when the user is in an unconscious state (for example, the user is asleep, is in a coma or loses motor function), the user is in a conscious but coerced/forced state (for example, the user encounters a pyramid scheme, robbery, or the like), or the like), another person may use the user's fingerprint, face or iris to undergo biometric recognition verification. For example, in some special occasions, another person wants to unlock the screen of the terminal device of the user. In this case, if the terminal device prompts the user to input a fingerprint, another person may use the user's finger to input a fingerprint or force the user to input his fingerprint to perform unlocking, thereby possibly leading to the leakage of personal information of the user. Similarly, the foregoing problem also exists for other biometric recognition verification such as facial verification, voiceprint verification, iris verification, and the like. In view of this, the embodiment provides a processing method for disabling or invalidating biometric recognition verification information or a verification mode corresponding to the biometric recognition verification information. The method may specifically include the following steps S202 to S232.

The step S202 includes: determining whether a received touchscreen operation is a predetermined operation.

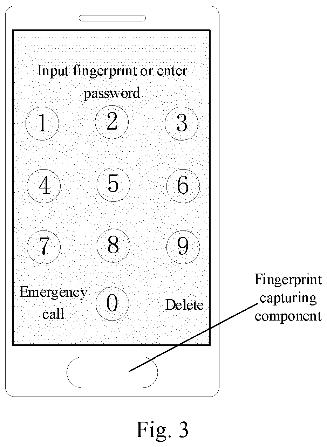

In an implementation, taking a common screen unlocking process of the terminal device for example, if the first verification information is a fingerprint, the operation corresponding to the first verification information is unlocking the screen. Generally, in the normal usage of the terminal device, a fingerprint unlocking mode for the screen of the terminal device is in an active state. That is, when the user does not need to use the terminal device, the user may lock the screen of a mobile phone by pressing the power button or another designated button briefly. In this case, the terminal device turns off the screen. As shown in Fig. 3, when the user needs to use the terminal device again, the user may press the power button or another designated button briefly, and the terminal device will turn on the screen and display an unlocking prompt. At this point, the user may press a finger corresponding to the fingerprint for unlocking on the fingerprint capturing component of the terminal device. The terminal device may capture fingerprint data of the finger via the fingerprint capturing component. The captured fingerprint data may be used as the biometric recognition verification information for comparison with the first verification information corresponding to fingerprint data registered by the user in advance. If the two match, the screen of the terminal device is unlocked. If the two do not match, a prompt sound or prompt information is output to inform the user that unlocking fails. In this case, the user may input the biometric recognition verification information, i.e., fingerprint data, again. When all attempts of the user to use the fingerprint unlocking mode to unlock the screen of the terminal device fail and the number of failures reaches a predetermined threshold, the fingerprint unlocking mode for the screen of the terminal device is no longer active or is disabled. That is, at this time, the screen of the terminal device cannot be unlocked even if the user inputs correct fingerprint data, and the screen can only be unlocked by using another verification mode provided by the terminal device, for example, by inputting a character and/or a gesture pattern. In addition, in a practical application, there may be other implementations of invalidating or disabling the fingerprint unlocking mode for the screen of the terminal device. For example, after the terminal device is restarted, the fingerprint unlocking mode for the screen of the terminal device is invalidated or disabled, and when the user needs to access the home interface of the terminal device, the user cannot use a fingerprint to unlock the screen, but can only unlock the screen by inputting a character and/or a gesture pattern.

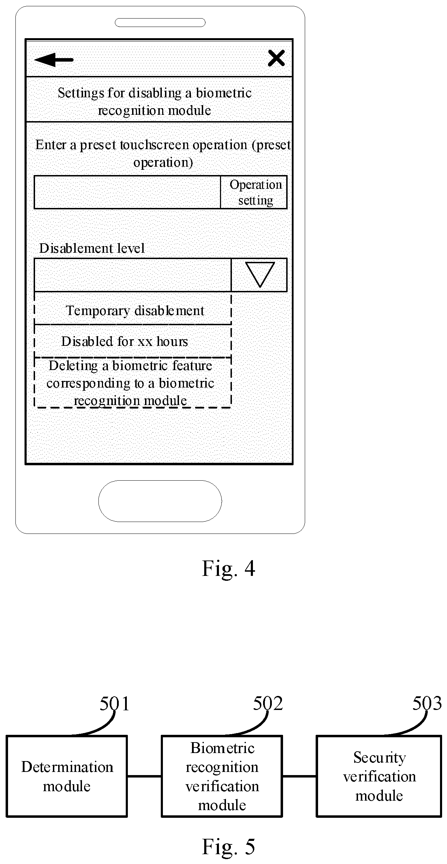

However, the foregoing two manners of invalidating or disabling a verification mode currently used in a terminal device or a default verification mode can only be implemented in specific conditions or specific occasions. To prevent another user from illegally acquiring information stored in the terminal device, a mechanism for invalidating or disabling currently-used or default biometric recognition verification information in the terminal device or a corresponding verification mode may be set. The mechanism may specifically include the following process: a setting page for the invalidation or disablement of the biometric recognition verification information or a verification mode corresponding to the biometric recognition verification information may be provided in the terminal device. The setting page may include: a setting option of the predetermined operation for disabling the biometric recognition verification information or a verification mode corresponding to the biometric recognition verification information, a level for disabling the biometric recognition verification information or a verification mode corresponding to the biometric recognition verification information (which may be referred to as a disablement level for ease of subsequent description), an OK button, a Cancel button, and the like. As shown in Fig. 4, when a user needs to perform setting regarding the disablement of current biometric recognition verification information or a verification mode corresponding to the biometric recognition verification information, the user may open the setting page. The user may locate a setting option of the predetermined operation on the setting page and tap the setting option, and the terminal device may activate a corresponding sensor. The user may then input the predetermined operation in current display interface. For example, the user presses at a position in the current display interface, which may specifically be a press-finger prompt area. In this case, the terminal device may detect and record the position and intensity of the press in the area by using the sensor. For another example, the user draws a specific symbol in the current display interface. Specifically, the user draws a symbol "S" in the current display interface. In this case, the terminal device may use the sensor to detect and record the symbol drawn by the user. After completing the input, the user may tap the Ok button or a Store button. The terminal device may use the touchscreen operation input by the user as the predetermined operation. The user may then select a disablement level. The disablement level may be set according to the user's requirement. For example, the disablement level may include: temporary disablement, disabled for preset first duration, deletion of a biometric feature (including first verification information) corresponding to a biometric recognition module, and the like. In the case of the temporary disablement, the user may use a password formed by characters to revoke the disablement. The disabled for preset first duration includes, for example, disabled for 12 hours, disabled for 24 hours, or the like. After selecting the disablement level, the user may tap the OK button in the setting page. The terminal device may acquire the data input by the user in the setting page and store the data.

It should be noted that, to make the touchscreen operation of the user as subtle as possible and reduce unnecessary trouble that may occur subsequently, during the setting of the predetermined operation, the predetermined operation should be as simple as possible and can be easily memorized by the user.

When another person wants the user to input first verification information to perform an operation corresponding to the first verification information, the screen of the terminal device may be turned on, and the terminal device displays a biometric recognition verification screen. If the user does not want another person to view content stored in the terminal device, the user may perform the touchscreen operation in the current display interface. In this case, the terminal device may activate a corresponding sensor. For example, if the predetermined operation is a press, the terminal device may activate a pressure sensor. If the predetermined operation is a gesture operation for inputting a character, the terminal device may activate a touchscreen sensor. The touchscreen operation of the user may be detected by using the sensor, and the acquired touchscreen operation may be compared with the predetermined operation to determine whether the acquired touchscreen operation is the predetermined operation. If it is determined that the touchscreen operation is the predetermined operation, the processing of the following step S204 to step S228 may be performed. If it is determined that the touchscreen operation is not the predetermined operation, the processing of the following step S230 to step S232 may be performed.

In case that the touchscreen operation is the predetermined operation, the terminal device may disable the biometric recognition module (the biometric recognition module may be a component for biometric recognition verification, for example, the fingerprint capturing component in Fig. 3, and if the biometric recognition module is disabled, the user cannot undergo biometric recognition verification). After the biometric recognition module is disabled, corresponding processing may be performed according to foregoing different disablement levels. Specifically, if the disablement level is the temporary disablement, the terminal device may disable the biometric recognition module. If the user needs to restore a biometric recognition function, the user may use non-biometric recognition verification information (for example, a password formed by characters or a password formed by a gesture pattern) to revoke the disablement of the biometric recognition module. For details, reference may be made to the following step S204 to step S212.

In addition, the application of the first verification information is not limited to the fingerprint unlocking mode for the screen of the terminal device. The first verification information may further be applied to a fingerprint unlocking mode for launching an application program, fingerprint verification mode for payment in a transaction process, or the like. The fingerprint unlocking mode for launching an application program may specifically include the following content: the user may preset a processing mechanism that the launch of one or more application programs requires the user to unlock the application program. For a specific setting process, reference may be made to the foregoing setting process of a fingerprint unlocking mode for the screen. Details thereof are not described herein again. When the user needs to use the application program, the user may tap a corresponding application program shortcut icon in the terminal device. If the terminal device determines that the application program requires fingerprint unlocking, prompt information used to prompt the user to input a fingerprint or an unlocking password may be displayed before the application program is launched. At this point, the user may input verification information. For a fingerprint verification mode for payment in a transaction process and a fingerprint unlocking mode for other matter, reference may be made to the foregoing description of processing. Details thereof are not described herein again.

The step S204 includes: acquiring biometric recognition verification information input by a user if the touchscreen operation is the predetermined operation, and determining that the verification fails when the acquired biometric recognition verification information matches preset first verification information.

In an implementation, when the terminal device receives the touchscreen operation of the user, the terminal device may match the touchscreen operation against the predetermined operation for invalidating or disabling the first verification information or a verification mode corresponding to the first verification information (that is, invalidating or disabling fingerprint verification, or disabling the biometric recognition module). If the terminal device determines through the matching that the touchscreen operation of the user is the predetermined operation for disabling the biometric recognition module, the biometric recognition module (for example, the fingerprint capturing component) is set to an invalidated or disabled state. In this case, a verification page may still be displayed, and the biometric recognition verification page continues to be used to acquire the biometric recognition verification information input by the user. When the acquired biometric recognition verification information matches the preset first verification information, it is determined that verification fails. That is, in this case, regardless of whether the biometric recognition verification information corresponding to the fingerprint data input by the user is the first verification information, the terminal device cannot perform the operation corresponding to the first verification information, i.e., unlocking the screen (or launching an application program). At the same time, a target object (for example, the screen or a file) requiring biometric recognition verification is locked by the terminal device. In this way, the terminal device cannot unlock the target object no matter what fingerprint data is input by the user at the request of another person, thereby it is ensured that the data or target object stored in the terminal device remains in a secure state.

In addition, in the case that a touchscreen operation performed by the user is received and the touchscreen operation is the predetermined operation, in order to restore a normal biometric recognition verification function of the terminal device

(that is, to revalidate the fingerprint verification mode), if the disablement level of the biometric recognition module is the temporary disablement, the biometric recognition verification function may be restored (or the disablement of the biometric recognition module may be revoked) in a plurality of manners. The following provides an optional processing manner, which may specifically include the following step S206 to step S212.

The step S206 includes: acquiring identity information input by the user if the touchscreen operation is the predetermined operation.

The identity information may be information used to represent user's identity, and includes, for example, a specified identification number (for example, identity card number and the like) of the user, a character password preset by the user, or the like. Considering that a person has a limited quantity of fingerprints, in order to prevent a situation that verification succeeds as a result of coerced verification attempts using each finger of the user, thereby causing a loss for the user, the identity information may be set to be different in kind from the biometric recognition verification information for security verification. That is, if the biometric recognition verification information is formed by fingerprint data, the identity information may be formed by any data other than fingerprint data. For example, the identity data is formed by characters, facial data, or the like.

There may be various specific processing manners of step S206 in a practical application. The following provides an optional processing manner, which may specifically include the following substep 1 and substep 2.

The substep 1 includes: displaying an identity verification page and transmitting the identity information to the target device if the touchscreen operation is the predetermined operation.

The identity verification page may be a page used to prompt the user to undergo an identity verification. The identity verification page may include a plurality pieces of information and/or a plurality of buttons. For example, if the identity information is formed by characters, as shown in Fig. 3, the identity verification page may include numeric keys or letter keys. Optionally, the identity verification page may include prompt information, which may include information for instructing the user to perform an operation, such as "swipe up to unlock" or "unlock with fingerprint". Optionally, if the identity information is formed by data of a gesture operation of the user, the identity verification page may include a plurality of (for example, 9) dots or circles arranged regularly, to prompt the user to input a gesture pattern or the like. The identity information may be information different (in kind and content) from the first verification information for a target object that requires biometric recognition verification. The identity information may be temporary unlocking information used to revalidate the first verification information or a verification mode corresponding to the first verification information (that is, fingerprint unlocking or fingerprint payment verification) when the first verification information or the verification mode corresponding to the first verification information is disabled. For example, the identity information may be ht325yg, 293847, or the like. The target device may be a preset device different from the terminal device used by the user. For example, the target device is another terminal device of the user, a terminal device used by a friend or family member of the user, or the like.

In an implementation, if the terminal device receives a touchscreen operation performed by the user and the touchscreen operation is the predetermined operation, it may be determined that a target object that is stored in the terminal device and requires biometric recognition verification is at risk. In this case, for the security of the target object, the biometric recognition module may be set to a disabled (or invalidated) state, and the target object is locked (for specific processing, reference may be made to the foregoing description). In addition, the terminal device may use a preset unlocking rule to generate identity information, and may transmit the identity information to a preset target device by means of a short message, speech data, or the like. In addition, the identity information may further be preset by the user. In a practical application, the user may set a plurality pieces of different temporary unlocking information, from which the terminal device may choose one piece of temporary unlocking information as the identity information. For example, the user presets a plurality pairs of question and answer (that is, the user sets a plurality of questions and sets one answer to each question) as temporary unlocking information. The terminal device may select one question, provide the question to the user, and compare an answer input by the user with a preset answer to determine whether verification succeeds.

The substep 2 includes: acquiring the identity information input by the user on the identity verification screen.

In an implementation, to facilitate the user to input the identity information, the terminal device may display an identity verification page so that the user may input the identity information to perform an unlocking operation.

The step S208 includes: determining that the verification succeeds if the identity information matches preset second verification information.

The second verification information may be set according to an actual situation.

In an implementation, if the user needs to unlock a target object, second verification information may be acquired from the target device or preset second verification information may be determined. The user may then input the identity information corresponding to the second verification information on the identity verification page displayed by the terminal device. After input is completed, the user may tap the OK button on the identity verification screen, or it may be determined that the input of the user is completed if the terminal device has not detected a tap on the identity verification page for predetermined duration. The terminal device may acquire the identity information input by the user. The terminal device may match the identity information against the second verification information. If the identity information matches the second verification information, the biometric recognition module may be switched from a disabled state to an active state. In this case, the terminal device may unlock the target object and may acquire information related to the target object, for example, display the home interface of the terminal device, launch the predetermined application program, or the like.

It should be noted that, the processing of the foregoing step S208 may be implemented in a variety of manners besides the foregoing manner. The following further provides an optional processing manner, which may specifically include the following process: if the identity information matches the second verification information, the biometric recognition module may be switched from a disabled state to an active state. At this point, the user may undergo verification using the first verification information to unlock the target object. The terminal device may acquire information related to the target object. For details, reference may be made to the processing of the following step S210 and step S212.

By means of the processing of the foregoing step S208, the biometric recognition verification function of the terminal device may be restored (that is, the biometric recognition module operates normally). In a next security verification process, the terminal device may implement the following step S210 and step S212.

The step S210 includes: acquiring the biometric recognition verification information input by the user.

The step S212 includes: determining that the verification succeeds if the biometric recognition verification information acquired in the foregoing step S210 matches preset first verification information.

For a specific processing process of the foregoing step S210 and step S212, reference may be made to the related description of step S104 in the foregoing embodiment. Details thereof are not described herein again.

In addition, the processing manner of the foregoing step S204 to step S212 is only a possible implementation of some embodiments of the present disclosure. In a practical application, there may be a plurality of implementations. The following further provides an optional implementation, which may specifically include the following step S214 to step S218.

The step S214 includes: disabling the biometric recognition module so that the biometric recognition module is unavailable for preset first duration if the touchscreen operation is the predetermined operation.

The first duration may be set according to an actual situation, and includes specifically, 12 hours, 24 hours, or the like.

In an implementation, if the disablement level of the biometric recognition module preset by the user in the terminal device is the disabled for preset first duration, when the terminal device acquires the touchscreen operation of the user and determines that the touchscreen operation is the predetermined operation, the terminal device may determine that the user wants to disable the biometric recognition module. In this case, the terminal device may perform processing of disabling the biometric recognition module, to prevent the biometric recognition module from acquiring the biometric recognition verification information. In this way, the user cannot pass verification by using the biometric recognition verification information. In addition, if the disablement level currently set in the terminal device is the disabled for preset first duration, the terminal device may stop normal operation of the biometric recognition module.

In addition, in a case that the disablement level is the disabled for preset first duration, after the biometric recognition module has been disabled for the preset first duration, the terminal device may restore normal operation of the biometric recognition module, which may specifically include the following step S216 and step S218.

The step S216 includes: starting timing when it is determined that the acquired touchscreen operation is the predetermined operation, and acquiring biometric recognition verification information input by a user after the preset first duration is reached.

In an implementation, the terminal device starts timing when a touchscreen operation performed by the user is received and it is determined that the touchscreen operation is the predetermined operation. After the predetermined duration is reached, the terminal device may automatically revoke the disablement of the biometric recognition verification information or a verification mode corresponding to the biometric recognition verification information, so as to restore the normal biometric recognition verification function of the terminal device. In this case, the terminal device may receive the biometric recognition verification information input by the user. After the user inputs corresponding biometric recognition verification information on the biometric recognition verification screen, the biometric recognition verification information may be acquired. At any moment after the terminal device starts timing and before the predetermined duration is reached, the user still cannot unlock the target object by using the biometric recognition verification information, that is, at this moment, the biometric recognition verification information or the verification mode corresponding to the biometric recognition verification information is still in a disabled state.

The step S218 includes: determining that verification succeeds if the biometric recognition verification information matches preset first verification information.

In addition, there may be a plurality of processing manners different from the processing manner of the foregoing step S204 to step S212 and the processing manner of the foregoing step S214 to step S218. The following further provides an optional implementation, which may specifically include the following step S220 to step S224.

The step S220 includes: disabling the biometric recognition module so that the biometric recognition module is unavailable for a preset first number of times if the touchscreen operation is the predetermined operation.

The first number of times may be set according to an actual situation, and is specifically, 5 times, 10 times, or the like.

In an implementation, if the disablement level of the biometric recognition module preset by the user in the terminal device is: disabled for a preset first number of times, when the terminal device acquires the touchscreen operation of the user and determines that the touchscreen operation is the predetermined operation, the terminal device may determine that the user wants to disable the biometric recognition module. In this case, the terminal device may perform processing of disabling the biometric recognition module, to prevent the biometric recognition module from acquiring the biometric recognition verification information. In this way, the user cannot pass verification by using the biometric recognition verification information. In addition, if the disablement level currently set in the terminal device is the disabled for a preset first number of times, the terminal device may stop using the biometric recognition module to perform verification processing.

In addition, in a case that the disablement level is the disabled for a preset first number of times, after the biometric recognition module has been disabled and unavailable for the preset first number of times, the terminal device may restore normal operation of the biometric recognition module, which may specifically include the following step S222 and step S224.

The step S222 includes: starting counting a number of times that the biometric recognition module is attempted to be used when it is determined that the acquired touchscreen operation is the predetermined operation, and acquiring biometric recognition verification information input by a user after the number of times reaches the preset first number of times.

In an implementation, the terminal device starts timing when a touchscreen operation performed by the user is received and it is determined that the touchscreen operation is the predetermined operation. After the predetermined duration is reached, the terminal device may automatically revoke the disablement of the biometric recognition verification information or a verification mode corresponding to the biometric recognition verification information, so as to restore the normal biometric recognition verification function of the terminal device. In this case, the terminal device may receive the biometric recognition verification information input by the user. After the user inputs corresponding biometric recognition verification information on the biometric recognition verification screen, the biometric recognition verification information may be acquired. At any moment after the terminal device starts timing and before the predetermined duration is reached, the user still cannot unlock the target object by using the biometric recognition verification information, that is, at this moment, the biometric recognition verification information or the verification mode corresponding to the biometric recognition verification information is still in a disabled state.

The step S224 includes: determining that the verification succeeds if the biometric recognition verification information matches preset first verification information.

In addition, there may be a plurality of processing manners different from the processing manner of the foregoing step S204 to step S212, the processing manner of the foregoing step S214 to step S218, and the processing manner of the foregoing step S220 to step S224. The following further provides an optional implementation, which may specifically include the following step S226.

The step S226 includes: disabling a biometric recognition module and changing an authentication mode if the touchscreen operation is the predetermined operation.

The authentication mode may be a verification mode. The authentication mode may include an authentication mode based on biometric recognition, an authentication mode based on a gesture pattern, a character-based authentication mode, and the like.

In an implementation, if the disablement level of the biometric recognition module preset by the user in the terminal device is: changing authentication mode, and the terminal device stores therein a preset authentication mode to be changed to (for example, changing from the authentication mode based on biometric recognition to a character-based authentication mode), when the touchscreen operation of the user is acquired and it is determined that the touchscreen operation is the predetermined operation, the terminal device may determine that the user wants to disable the biometric recognition module. In this case, the terminal device may perform processing of disabling the biometric recognition module, to prevent the biometric recognition module from acquiring the biometric recognition verification information. In this way, the user cannot pass verification by using the biometric recognition verification information. In addition, if the disablement level currently set in the terminal device is the changing authentication mode, the terminal device may stop using the biometric recognition module and instead use the authentication mode preset by the user to verify the user. Based on the foregoing example, if the user undergoes verification by inputting characters, for a specific verification process, reference may be made to the foregoing step S206 to step S212. Optionally, in the process of setting a disablement level, for the disablement level of changing authentication mode, the user may preset a verification password including characters, a gesture pattern, or the like.

In the foregoing case, if the user needs to continue using the biometric recognition module, an adjustment may be made through system settings of the terminal device.

In addition, there may be a plurality of processing manners different from the processing manner of the foregoing step S204 to step S212, the processing manner of the foregoing step S214 to step S218, the processing manner of the foregoing step S220 to step S224, and the processing manner of step S226. The following further provides an optional implementation, which may specifically include the following step S228.

The step S228 includes: deleting a locally pre-stored biometric feature corresponding to a biometric recognition module if the touchscreen operation is the predetermined operation.

The biometric feature may include biometric device verification information (that is, the first verification information), information related to the user, and the like.

In an implementation, if the disablement level of the biometric recognition module preset by the user in the terminal device is: deleting a biometric feature corresponding to a biometric recognition module, when the touchscreen operation of the user is acquired and it is determined that the touchscreen operation is the predetermined operation, the terminal device may determine that the user wants to delete a biometric feature corresponding to the biometric recognition module. In this case, the terminal device may delete a biometric feature of a specific user which is preset by the user or may delete all biometric features, so that there is no biometric feature pre-stored in the terminal device and therefore the biometric recognition module cannot be used. In this way, the user cannot pass verification by using the biometric recognition verification information, thereby ensuring the security of an account of the user. In the foregoing case, if the user needs to continue using the biometric recognition module, a biometric feature may be input again and saved.

It should be noted that, the processing manner of the foregoing step S204 to step S212, the processing manner of the foregoing step S214 to step S218, the processing manner of the foregoing step S220 to step S224, the processing manner of step S226, and the processing manner of step S228 are separately described hereinbefore. In a practical application, the terminal device may simultaneously perform two or more processing manners of the foregoing plurality of processing manners. For related processing processes, reference may be made to the foregoing description. Details thereof are not described herein again.

In addition, if it is determined through the determination process of the foregoing step S202 that the touchscreen operation is not the predetermined operation, the processes of the following step S230 and step S232 may be performed.

The step S230 includes: acquiring biometric recognition verification information input by a user if the touchscreen operation is not the predetermined operation.

The step S232 includes: determining that the verification succeeds if the biometric recognition verification information acquired in the foregoing step S230 matches preset first verification information.

It should be noted that, in the foregoing embodiment, to better describe a detailed processing process of security verification, the screen unlocking of the terminal device is used as an example. In a practical application, the method for security verification in some embodiments of the present disclosure is not limited to be applied to screen unlocking, but may be applied to biometric recognition unlocking for launching an application program, biometric recognition payment in a transaction process, and the like. For a specific processing process thereof, reference may be made to the foregoing related description. Details thereof are not described herein again.

In the method for security verification provided in some embodiments of the present disclosure, it is determined whether a received touchscreen operation is a predetermined operation, then corresponding verification processing is performed. That is, if the touchscreen operation is not the predetermined operation, biometric recognition verification information input by a user is acquired and the biometric recognition verification information is verified; if the touchscreen operation is the predetermined operation, verification processing corresponding to the predetermined operation is performed. In this way, a set predetermined touchscreen operation is used to control whether biometric recognition verification succeeds. For example, when a situation where the identity verification may be against the user's will is encountered, the user may use the predetermined touchscreen operation to make the biometric recognition verification for unlocking, payment or the like to fail, so that it is ensured that no leakage of file or data stored in a terminal device would occur, thereby improving the security of user information and property.

In addition, the predetermined operation is preset for disabling the biometric recognition module (the fingerprint capturing component shown in Fig. 3, or the like) currently used in the terminal device, so that the currently used biometric recognition verification information or a verification mode corresponding to the biometric recognition verification information is invalidated or disabled, to lock a target object requiring biometric recognition verification. It is ensured that a leakage of file or data stored in a terminal device does not occur, thereby improving the security of user information and property.

The method for security verification provided in some embodiments of the present disclosure is described above. Based on a similar concept, the present disclosure further provides in some embodiments an apparatus for security verification, as shown in Fig. 5.

The apparatus for security verification includes a determination module 501, a biometric recognition verification module 502, and a security verification module 503, where the determination module 501 is configured to determine whether a received touchscreen operation is a predetermined operation; the biometric recognition verification module 502 is configured to: acquire biometric recognition verification information input by a user if the touchscreen operation is not the predetermined operation, and verify the biometric recognition verification information; and the security verification module 503 is configured to perform verification processing corresponding to the predetermined operation if the touchscreen operation is the predetermined operation.

In some embodiments of the present disclosure, the biometric recognition verification module 502 is configured to: determine that the verification succeeds if the biometric recognition verification information matches preset first verification information; and the security verification module 503 is configured to: acquire the biometric recognition verification information input by the user if the touchscreen operation is the predetermined operation, and determine that the verification fails when the biometric recognition verification information matches the first verification information.

In some embodiments of the present disclosure, the predetermined operation is any one or combination of two or more of following operations: a tap, a swipe, a press, a multi-touch, multiple consecutive taps, and a gesture based on a writing symbol.

In some embodiments of the present disclosure, the security verification module 503 is configured to perform one or a combination of two or more of the following operations: disabling a biometric recognition module so that the biometric recognition module is unavailable for preset first duration; disabling the biometric recognition module so that the biometric recognition module is unavailable for a preset first number of times; disabling the biometric recognition module, and changing an authentication mode.

In some embodiments of the present disclosure, the apparatus further includes: a biometric feature deletion module, configured to delete a locally pre-stored biometric feature corresponding to the biometric recognition module.

The apparatus for security verification provided in some embodiments of the present disclosure can implement various processes implemented by a terminal device in the method embodiments in Fig. 1 to Fig. 4. To avoid repetition, Details thereof are not described herein again.

In the apparatus for security verification provided in some embodiments of the present disclosure, it is determined whether a received touchscreen operation is a predetermined operation, then corresponding verification processing is performed. That is, if the touchscreen operation is not the predetermined operation, biometric recognition verification information input by a user is acquired and the biometric recognition verification information is verified; if the touchscreen operation is the predetermined operation, verification processing corresponding to the predetermined operation is performed. In this way, a set predetermined touchscreen operation is used to control whether biometric recognition verification succeeds. For example, when a situation where the identity verification may be against the user's will is encountered, the user may use the predetermined touchscreen operation to make the biometric recognition verification for unlocking, payment or the like to fail, so that it is ensured that no leakage of file or data stored in a terminal device would occur, thereby improving the security of user information and property.

In addition, the predetermined operation is preset for disabling the biometric recognition module (the fingerprint capturing component shown in Fig. 3, or the like) currently used in the terminal device, so that the currently used biometric recognition verification information or a verification mode corresponding to the biometric recognition verification information is invalidated or disabled, to lock a target object requiring biometric recognition verification. It is ensured that a leakage of file or data stored in a terminal device does not occur, thereby improving the security of user information and property.

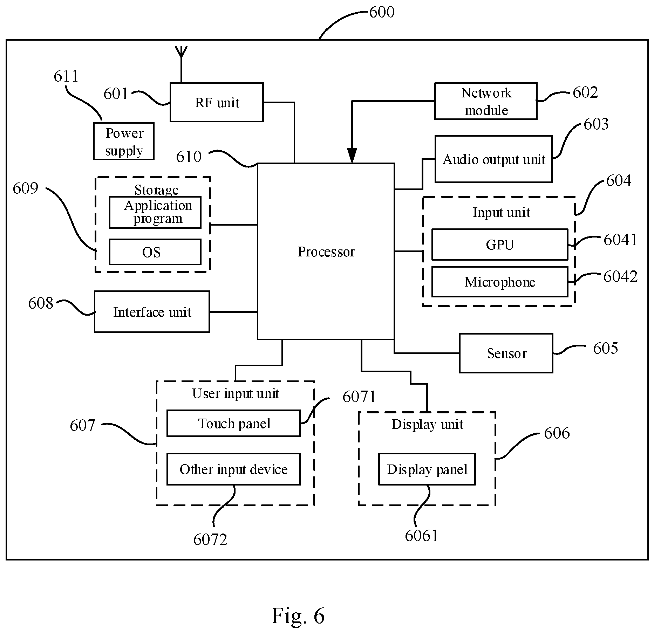

Fig. 6 is a schematic structural diagram of hardware of a mobile terminal implementing some embodiments of the present disclosure.

A mobile terminal 600 includes, but is not limited to, a radio frequency (RF) unit 601, a network module 602, an audio output unit 603, an input unit 604, a sensor 605, a display unit 606, a user input unit 607, an interface unit 608, a storage 609, a processor 610, and a power supply 611, among other components. It may be understood by those skilled in the art that the mobile terminal structure shown in Fig. 6 does not constitute a limitation on the mobile terminal, and the mobile terminal may include more or fewer components than those shown, or some components may be combined, or different component arrangements are used. In the present disclosure, the mobile terminal includes, but is not limited to, a mobile phone, a tablet computer, a notebook computer, a palmtop computer, an in-vehicle terminal, a wearable device, and a pedometer.

The processor 610 is configured to determine whether a received touchscreen operation is a predetermined operation;
the processor 610 is configured to: acquire biometric recognition verification information input by a user if the touchscreen operation is not the predetermined operation, and verify the biometric recognition verification information; and
the processor 610 is further configured to perform verification processing corresponding to the predetermined operation if the touchscreen operation is the predetermined operation.

Optionally, the processor 610 is further configured to: determine that the verification succeeds if the biometric recognition verification information matches preset first verification information.

Optionally, the processor 610 is further configured to: acquire the biometric recognition verification information input by the user if the touchscreen operation is the predetermined operation, and determine that the verification fails when the biometric recognition verification information matches the first verification information.

Optionally, the predetermined operation is any one or combination of two or more of following operations: a tap, a swipe, a press, a multi-touch, multiple consecutive taps, and a gesture based on a writing symbol.

Optionally, the processor 610 is further configured to perform one or a combination of two or more of the following operations:
disabling a biometric recognition module so that the biometric recognition module is unavailable for preset first duration;
disabling the biometric recognition module so that the biometric recognition module is unavailable for a preset first number of times;
disabling the biometric recognition module, and changing an authentication mode.

Optionally, the processor 610 is further configured to delete a locally pre-stored biometric feature corresponding to the biometric recognition module.

In the mobile terminal provided in some embodiments of the present disclosure, it is determined whether a received touchscreen operation is a predetermined operation, then corresponding verification processing is performed. That is, if the touchscreen operation is not the predetermined operation, biometric recognition verification information input by a user is acquired and the biometric recognition verification information is verified; if the touchscreen operation is the predetermined operation, verification processing corresponding to the predetermined operation is performed. In this way, a set predetermined touchscreen operation is used to control whether biometric recognition verification succeeds. For example, when a situation where the identity verification may be against the user's will is encountered, the user may use the predetermined touchscreen operation to make the biometric recognition verification for unlocking, payment or the like to fail, so that it is ensured that no leakage of file or data stored in a terminal device would occur, thereby improving the security of user information and property.

In addition, the predetermined operation is preset for disabling the biometric recognition module (the fingerprint capturing component shown in Fig. 3, or the like) currently used in the terminal device, so that the currently used biometric recognition verification information or a verification mode corresponding to the biometric recognition verification information is invalidated or disabled, to lock a target object requiring biometric recognition verification. It is ensured that a leakage of file or data stored in a terminal device does not occur, thereby improving the security of user information and property.

It should be understood that in some embodiments of the present disclosure, the RF unit 601 may be configured to transmit and receive signals during information transmission or phone call. To be specific, the RF unit 601 may, upon receiving downlink data from the base station, transmit the downlink data to the processor 610 for processing. In addition, the RF unit 601 may transmit uplink data to the base station. Usually, the RF unit 601 includes, but is not limited to: an antenna, at least one amplifier, a transceiver, a coupler, a low-noise amplifier, a duplexer and the like. In addition, the RF unit 601 may communicate with a network and other devices via a wireless communication system.

The mobile terminal provides a user with wireless broadband Internet access by means of the network module 602, such as sending and receiving emails, browsing webpages and accessing streamed media.

The audio output unit 603 is configured to convert audio data received by the RF unit 601 or the network module 602 or audio data stored in the storage 609 into an audio signal and output the audio signal as a sound. In addition, the audio output unit 603 is further configured to provide an audio output related to a specific function executed by the mobile terminal 600 (such as, incoming call ringtone, message received ringtone). The audio output unit 603 includes a loudspeaker, a buzzer and a telephone receiver.

The input unit 604 is configured to receive an audio or video signal. The input unit 604 may include a graphics processing unit (GPU) 6041 and a microphone 6042. The GPU 6041 is configured to process image data of a static image or video captured by an image capturing unit (e.g., a camera) in a video capturing mode or an image capturing mode, and a processed image frame may be displayed by the display unit 606. The image frame processed by the GPU 6041 may be stored in the storage 609 (or other storage medium) or transmitted via the RF unit 601 or network module 602. The microphone 6042 is configured to receive a sound, and convert the sound into audio data. In a phone call mode, the processed audio data may be converted into a format suitable for transmission to a mobile communication base station via the RF unit 601 and output.

The mobile terminal 600 further includes at least one sensor 605, for example, an optical sensor, a motion sensor, among others. In specific, the optical sensor includes ambient light sensor and proximity sensor. The ambient light sensor may adjust a brightness of a display panel 6061 according to the ambient light conditions. The proximity sensor may deactivate the display panel 6061 and/or a backlight when the mobile terminal 600 is moved close to an ear. As a kind of motion sensor, an acceleration sensor may detect a magnitude of acceleration on each direction (generally, on three axes). While remaining still, the acceleration sensor may detect the magnitude and direction of gravity, which may be used in posture identification of the mobile terminal (e.g., switch between portrait and landscape modes, related games, magnetometer posture calibration), vibration identification related function (e.g., pedometer, tapping) and the like; the sensor 605 may further include a fingerprint sensor, a pressure sensor , an iris sensor, a molecule sensor, a gyroscope, a barometer, a hygrometer, a thermometer, an infrared sensor and the like, which is not described in detail herein.

The display unit 606 is configured to display information inputted by the user or provided to the user. The display unit 606 may include the display panel 6061. The display panel 6061 may be constructed in form of liquid crystal display (LCD), organic light-emitting diode (OLED) or the like.

The user input unit 607 may be configured to receive input numerical information or character information, and generate key signal inputs related to the user setting and function control of the mobile terminal. To be specific, the user input unit 607 includes a touch panel 6071 and other input device 6072. The touch panel 6071, also known as touch screen, may detect the touches thereon or in the vicinity thereof performed by the user (such as touch operations performed on or in the vicinity of the touch panel 6071 by the user using a finger, stylus or any other suitable object or accessory). The touch panel 6071 may include a touch detector and a touch controller. Wherein, the touch detector detects the position where the user touched and the signal resulting from the touch operation, and conveys the signal to the touch controller; the touch controller receives the touch information from the touch detector, converts the information into coordinates of the touch and conveys the coordinates to the processor 610, as well as receives and executes the commands from the processor 610. Further, the touch panel 6071 may be implemented in a variety of modes, such as resistance, capacitance, infrared and surface acoustic wave. In addition to the touch panel 6071, the user input unit 607 may include other input devices 6072. In specific, the other input devices 6072 may include, but is not limited to: physical keyboard, functional keys (such as volume control button, switch button, etc.), track ball, mouse, joystick, which is not described in detail herein.

Further, the touch panel 6071 may overlie the display panel 6061. Having detected a touch operation thereon or in the vicinity thereof, the touch panel 6071 conveys the detected touch signal to the processor 610 to determine a category of the touch event, and the processor 610 provides corresponding visual output on the display panel 6061 in accordance with the category of the touch event. Although, in Fig.6, the touch panel 6071 and the display panel 6061 are provided as two separate parts to implement the input and output functions of the mobile terminal, the touch panel 6071 and the display panel 6061 may be integrated to implement the input and output functions of the mobile terminal in some embodiments, which is not limited herein.

The interface unit 608 is an interface by which an external device is connected to the mobile terminal 600. For example, the external device may include a wired or wireless headset port, an external power source (or battery charger) port, a wired or wireless data port, a storage card port, a port configured to be connected to a device having an identification module, an audio input/output (I/O) port, a video I/O port, an earphone port and the like. The interface unit 608 may be configured to receive input (e.g., data information, power, etc.) from the external device and transfer the received input to one or more components in the mobile terminal 600, or may be configured to transmit data between the mobile terminal 600 and the external device.

The storage 609 may be configured to store software program and other data. The storage 609 may include generally a program storage area and a data storage area. The program storage area may store an operating system (OS), an application program required for at least one function (such as an audio playing function and an image playback function) and the like; the data storage area may store data (e.g., audio data, phone book, etc.) created according to usage of a mobile phone, and the like. Moreover, the storage 609 may include a cache, as well as a non-volatile storage, such as at least one disk storage device, flash memory or other non-volatile solid-state storage devices.

The processor 610 is a control center of the mobile terminal. The processor 610 is connected to various parts of the entire mobile terminal through various interfaces and lines, and performs various functions of the mobile terminal and processes data by executing or running software programs and/or modules stored in the storage 609 and invoking data stored in the storage 609, so as to achieve an overall monitoring of the mobile terminal. The processor 610 may include one or more processing units; optionally, the processor 610 may integrate an application processor and a modem, wherein the application processor is mainly responsible for executing an operating system, a user interface, an application program, etc., while the modem is mainly responsible for handling wireless communication. It is understood, the modem may not be integrated in the processor 610.

The mobile terminal 600 may further include a power supply 611 (e.g., a battery) providing power to various components. Optionally, the power supply 611 may be logically connected to the processor 610 via a power management system, such that functions such as charging management, discharging management and power management may be achieved through the power management system.

Optionally, the present disclosure further provides a mobile terminal, including a processor 610, a storage 609, and a computer program stored in the storage 609 and executable by the processor 610. The computer program is configured to be executed by the processor 610 to implement various processes in the embodiments of the foregoing method for security verification, and can achieve the same technical effects. To avoid repetition, Details thereof are not described herein again.

The present disclosure further provides a computer-readable storage medium, where the computer-readable storage medium stores therein a computer program, and the computer program is configured to be executed by a processor to implement various processes of the embodiments of the foregoing method for security verification, and can achieve the same technical effects. To avoid repetition, Details thereof are not described herein again. The computer-readable storage medium may be a volatile computer-readable storage medium or a non-volatile computer-readable storage medium, for example, a read-only memory (ROM), a random access memory (RAM), a magnetic disk, an optical disc or the like.

By means of the computer-readable storage medium provided in some embodiments of the present disclosure, it is determined whether a received touchscreen operation is a predetermined operation, then corresponding verification processing is performed. That is, if the touchscreen operation is not the predetermined operation, biometric recognition verification information input by a user is acquired and the biometric recognition verification information is verified; if the touchscreen operation is the predetermined operation, verification processing corresponding to the predetermined operation is performed. In this way, a set predetermined touchscreen operation is used to control whether biometric recognition verification succeeds. For example, when a situation where the identity verification may be against the user's will is encountered, the user may use the predetermined touchscreen operation to make the biometric recognition verification for unlocking, payment or the like to fail, so that it is ensured that no leakage of file or data stored in a terminal device would occur, thereby improving the security of user information and avoiding the user's economic loss.

In addition, the predetermined operation is preset for disabling the biometric recognition module (the fingerprint capturing component shown in Fig. 3, or the like) currently used in the terminal device, so that the currently used biometric recognition verification information or a verification mode corresponding to the biometric recognition verification information is invalidated or disabled, to lock a target object requiring biometric recognition verification. It is ensured that a leakage of file or data stored in a terminal device does not occur, thereby improving the security of user information and avoiding the user's economic loss.

A person skilled in the art should understand that the embodiments of the present disclosure may be provided as a method, a system, or a computer program product. Therefore, the present disclosure may be implemented in form of a hardware only embodiment, a software only embodiment, or an embodiment with a combination of software and hardware. Moreover, the present disclosure may be in form of a computer program product that is implemented on one or more computer-usable storage media (including but not limited to a disk storage, a compact disc ROM (CD-ROM), an optical storage, and the like) including computer usable program codes.

As can be seen from the foregoing technical solution provided in some embodiments of the present disclosure, in some embodiments of the present disclosure, it is determined whether a received touchscreen operation is a predetermined operation, then corresponding verification processing is performed. That is, if the touchscreen operation is not the predetermined operation, biometric recognition verification information input by a user is acquired and the biometric recognition verification information is verified; if the touchscreen operation is the predetermined operation, verification processing corresponding to the predetermined operation is performed. In this way, a set predetermined touchscreen operation is used to control whether biometric recognition verification succeeds. For example, when a situation where the identity verification may be against the user's will is encountered, the user may use the predetermined touchscreen operation to make the biometric recognition verification for unlocking, payment or the like to fail, so that it is ensured that no leakage of file or data stored in a terminal device would occur, thereby improving the security of user information and property.

The present disclosure is described with reference to the flowcharts and/or block diagrams of the method, the device (system), and the computer program product according to the present disclosure. It should be understood that computer program instructions may be used to implement each process and/or each block in the flowcharts and/or the block diagrams and a combination of processes and/or blocks in the flowcharts and/or the block diagrams. These computer program instructions may be provided to a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable storage that can direct a computer or other programmable data processing terminal device to function in a particular manner, such that the instructions stored in the computer-readable storage produce an article of manufacture including instruction means which implement the function specified in the flow diagram flow or flows and/or block diagram block or blocks.

The computer program instructions may also be loaded onto a computer or other programmable data processing terminal device to cause a series of operational steps to be performed on the computer or other programmable terminal device to produce a computer-implemented process such that the instructions which are executed on the computer or other programmable terminal device provide steps for implementing the functions specified in one or more processes of the flow diagrams and/or one or more blocks of block diagrams.

In one typical configuration, a computing device includes one or more processors (central processing units, CPUs), an input/output interface, a network interface, and a memory.

The memory may include a form of computer-readable medium, such as a non-permanent storage, a RAM, and/or a non-volatile storage, for example, a ROM or a flash RAM. The memory is an example of the computer-readable medium.

The computer-readable medium includes a permanent medium, a non-permanent medium, a removable medium and a non-removable medium that may implement storage of information by using any method or technology. The information may be a computer-readable instruction, a data structure, a program module or other data. An example of a computer storage medium includes, but is not limited to, a phase-change RAM (PRAM), a static RAM (SRAM), a dynamic RAM (DRAM), other type of RAM, a ROM, an electrically-erasable programmable ROM (EEPROM), a flash memory or another storage technology, a CD-ROM, a digital versatile disc (DVD) or other optical storage, a magnetic cassette, a magnetic tape, or a magnetic disk storage or other magnetic storage device or any other non-transmission medium, and may be configured to store information accessible by the computing device. According to the definition herein, the computer-readable medium does not include a computer readable transitory medium, for example, a modulated data signal and carrier wave.

It should further be noted that the terms "include", "include", or any variation thereof are intended to cover a non-exclusive inclusion. Therefore, in the context of a process, method, commodity, or device that includes a series of elements, the process, method, commodity, or device not only includes such elements, but also includes other elements not specified expressly, or may include elements inherent to the process, method, commodity, or device. If no more limitations are given, an element limited by "include a/an..." does not exclude existence of additional identical elements in the process, the method, the article, or the device which includes the element.

A person skilled in the art should understand that the embodiments of the present disclosure may be provided as a method, a system, or a computer program product. Therefore, the present disclosure may be implemented in form of a hardware only embodiment, a software only embodiment, or an embodiments with a combination of software and hardware. Moreover, the present disclosure may be in form of a computer program product that is implemented on one or more computer-usable storage media (including but not limited to a disk storage, a CD-ROM, an optical storage, and the like) including computer usable program codes.

The foregoing merely describes embodiments of the present disclosure and by no means constitutes a limitation on the present disclosure. A person skilled in the art may make various changes and variations to the present disclosure. Any changes, equivalent replacements, and improvements made without departing from the spirit and principle of the present disclosure shall fall within the scope of the claims of present disclosure.

## Claims

1. A method for security verification, comprising:
determining whether a received touchscreen operation is a predetermined operation;
acquiring biometric recognition verification information input by a user if the touchscreen operation is not the predetermined operation, and verifying the biometric recognition verification information; and
performing verification processing corresponding to the predetermined operation if the touchscreen operation is the predetermined operation.

2. The method according to claim 1, wherein the verifying the biometric recognition verification information comprises:
determining that the security verification succeeds if the biometric recognition verification information matches preset first verification information; and
the performing the verification processing corresponding to the predetermined operation if the touchscreen operation is the predetermined operation comprises:
acquiring the biometric recognition verification information input by the user if the touchscreen operation is the predetermined operation, and determining that the security verification fails if the biometric recognition verification information matches the first verification information.

3. The method according to claim 1, wherein the predetermined operation is any one or combination of two or more of following operations: a tap, a swipe, a press, a multi-touch, multiple consecutive taps, and a gesture based on a writing symbol.

4. The method according to claim 1, wherein the performing the verification processing corresponding to the predetermined operation if the touchscreen operation is the predetermined operation comprises one or a combination of two or more of following operations:
disabling a biometric recognition module so that the biometric recognition module is unavailable for preset first duration;
disabling the biometric recognition module so that the biometric recognition module is unavailable for a preset first number of times;
disabling the biometric recognition module, and changing an authentication mode.

5. The method according to claim 4, further comprising:
deleting a locally pre-stored biometric feature corresponding to the biometric recognition module.

6. An apparatus for security verification, comprising:
a determination module, configured to determine whether a received touchscreen operation is a predetermined operation;
a biometric recognition verification module, configured to: acquire biometric recognition verification information input by a user if the touchscreen operation is not the predetermined operation, and verify the biometric recognition verification information; and
a security verification module, configured to perform verification processing corresponding to the predetermined operation if the touchscreen operation is the predetermined operation.

7. The apparatus according to claim 6, wherein the biometric recognition verification module is configured to: determine that the security verification succeeds if the biometric recognition verification information matches preset first verification information; and
the security verification module is configured to: acquire the biometric recognition verification information input by the user if the touchscreen operation is the predetermined operation, and determine that the security verification fails when the biometric recognition verification information matches the first verification information.

8. The apparatus according to claim 6, wherein the predetermined operation is any one or combination of two or more of following operations: a tap, a swipe, a press, a multi-touch, multiple consecutive taps, and a gesture based on a writing symbol.

9. The apparatus according to claim 6, wherein the security verification module is configured to perform one or a combination of two or more of following operations:
disabling a biometric recognition module for a preset first duration;
disabling the biometric recognition module so that the biometric recognition module is unavailable for a preset first number of times;
disabling the biometric recognition module, and changing an authentication mode.

10. The apparatus according to claim 9, further comprising:
a biometric feature deletion module, configured to delete a locally pre-stored biometric feature corresponding to the biometric recognition module.

11. A mobile terminal, comprising:
a processor, a storage, and a computer program stored in the storage and configured to be executed by the processor, wherein the processor is configured to execute the computer program to implement steps in the method for security verification according to any one of claims 1 to 5.

12. A non-volatile computer-readable storage medium, comprising:
a computer program stored in the non-volatile computer-readable storage medium, wherein the computer program is configured to be executed by a processor to implement steps in the method for security verification according to any one of claims 1 to 5.
